# EUROPEAN PATENT APPLICATION

(11) **EP 2 508 818 A2**
(43) Date of publication of application: **10.10.2012**
(21) Application number: 12002525.9
(22) Date of filing: 06.04.2012
(51) Int. Cl.: F25B 1/04, F25B 49/02

(54) **Method and device for controlling a refrigerating appliance and refrigerating appliance implementing said method**

(30) Priority: 08.04.2011 IT TO20110324
(71) Applicant: Indesit Company S.p.a., 60044 Fabriano (AN) (IT)
(72) Inventor: Sabatini, Giorgio, 63030 Colli del Tronto (IT); Bertini, Marco, 06034 Foligno (PG) (IT)
(74) Representative: Dini, Roberto

(57) **Abstract**

A method for controlling a refrigerating appliance (101) is described, said refrigerating appliance (101) comprising a refrigerating circuit (201) that includes a variable speed compressor (203), a cell (102) which is cooled by said circuit (201), wherein said method comprises the steps of deactivating (403) said compressor (203) and then reactivating (406) said compressor (203). The method provides for storing (402) the rpm at which the compressor (203) was operating when said deactivation took place, and for reactivating said compressor (203) at an rpm value comprised between said stored rpm and a threshold value, if said stored rpm is higher than the threshold.

## Description

### [FIELD OF THE INVENTION]

The present invention relates to the field of household appliances, in particular to a method and a device for controlling a refrigerating appliance. More in particular, the invention relates to a method according to the preamble of claim 1. In addition, the present invention relates to a refrigerating appliance implementing the method of the present invention.

### [PRIOR ART]

Refrigerating appliances are known which comprise at least one refrigerated cell, a door allowing access to the refrigerated cell, and a refrigerating circuit implementing a refrigerating cycle. The cell contains objects, typically foodstuffs, that need to be cooled. In the refrigerating circuit, a compressor compresses a cycle fluid, also called refrigerating fluid (e.g. Freon or ammonia), in order to cause the fluid to change from the gaseous state to the liquid state. This first change of state produces heat, which is extracted from the cycle through a coil in direct contact with the environment outside the refrigerating appliance. Subsequently, the fluid in the liquid state is caused to expand and evaporate and, when brought into direct thermal contact with the refrigerated cell, it subtracts heat from the latter.

Modem refrigerating appliances comprise a variable speed compressor, also called variable capacity compressor, which can modulate the rpm of its own electric motor and therefore the cooling capacity of the circuit in which it is inserted.

One example of a refrigerating appliance of this kind is known from patent EP1423649B1.

The latest refrigerating appliances comprise a control unit that controls the revolution speed of the compressor depending on the cooling request received from the thermodynamic circuit, which can be detected, for example, by monitoring the evaporator temperature. In fact, the evaporator temperature is indicative of the required cooling power: typically, higher evaporator temperature values correspond to higher temperatures inside the compartment to be cooled, resulting in a request for more cooling power. Conversely, a lower evaporator temperature, which indicates a reduction in the temperature inside the compartment to be cooled, is interpreted as a request for less cooling power.

The compressor speed (rpm) is modulated in accordance with the feedback of an electric parameter correlated with the condition of the refrigerating gas.

As thermal load increases, the gas evaporation temperature increases as well, thus incrementing the electric parameter; hence the control system will adjust to a higher compressor speed.

Vice versa, when the temperature is low there is less request for compressor torque and rpm increase, and therefore the compressor will operate at lower consumption and noise levels.

During the operation of the refrigerating appliance formation of frost occurs, in particular on the coldest parts such as the evaporator of the refrigerating circuit, which is due to the moisture present inside the refrigerating appliance. The frost layer grows in operation, leading also to increased thermal insulation between the evaporator and the environment to be refrigerated, thus adversely affecting thermal exchange efficiency.

To regain operational efficiency, defrosting cycles are normally executed wherein the control system turns on heating means for thawing the frost, thus removing it from the evaporator.

During the defrosting cycle, the compressor is normally turned off.

When the refrigerating appliance is operating in hard conditions, e.g. because the door is opened frequently, or because the appliance is operating in hot environments, the compressor increases its own on-time percentage and speed; in the worst case, it may have to stay always on to be able to provide all the necessary refrigerating capacity.

In such conditions, the compressor is nevertheless turned off when a predetermined continuous on-time threshold is reached. In fact, the system is programmed to turn off the compressor for a predefined time in order to re-balance the pressure in the circuit and the lubricating oil that may be pumped into the circuit.

For example, after 8 hours of continuous operation the control system turns the compressor off for 8 minutes.

However, the system interprets this deactivation as a normal cooling cycle end condition, and at the next cycle the system will resume its normal operation, giving priority to the energy saving mode (the so-called "eco-mode"), wherein power consumption is lowest. This causes the compressor to operate at low rpm when it is turned on again, resulting in such a slow reaction and such a slow speed increase that it cannot ensure a satisfactory reduction of the temperature inside the refrigerator; this leads to the risk of damage to the contents of the refrigerating appliance (typically foodstuffs or other items or substances that must be preserved at a low, controlled temperature).

An aggravating factor is found in refrigerating appliances of the type know as "no-frost". In these appliances, the evaporator operates in a condition of forced convection and is subject to greater load loss increase and icing.

In fact, in heavy operating conditions the evaporator gets covered with ice, which reduces its thermal exchange efficiency.

Icing increases with temperature and compressor speed. The humid air adheres to the evaporator walls, thereby promoting icing and giving rise to a phenomenon of progressive icing increase such that the refrigerating gas will absorb less and less heat from the internal compartment of the refrigerating appliance.

In these conditions, the compressor will increase its own on-time percentage and speed, or in the worst case it may stay always on. In this case as well, the system is programmed to turn off the compressor for a predefined time in order to re-balance the pressure in the circuit and the oil.

As aforementioned, when the compressor is turned on again it is controlled in accordance with energy saving logics, i.e. at low rpm and with an excessively slow speed increase, resulting in adverse effects which may even be worse than those found in the preceding case.

The cooling of the contents of the refrigerating appliance is slower, with adverse effects on the preservation thereof.

The above-described problems may also occur in any other situations wherein the compressor is turned off and then turned on again.

### [OBJECTS AND SUMMARY OF THE INVENTION]

It is one object of the present invention to overcome the above-listed drawbacks of the refrigerating appliances known in the art.

In particular, it is one object of the present invention to provide a method for controlling a refrigerating appliance in a more efficient manner.

It is another object of the present invention to provide a method and a device which allow to ensure a proper and reliable preservation of the contents of the refrigerating appliance. It is a further object of the present invention to provide a method for controlling a refrigerating appliance which can be economically implemented.

These and other objects of the present invention are achieved through a method and a refrigerating appliance incorporating the features set out in the appended claims, which are intended as an integral part of the present description.

The general idea at the basis of the present invention is to provide, in accordance with claim 1, a method for controlling a refrigerating appliance, said refrigerating appliance comprising a refrigerating circuit that includes a variable speed compressor, a cell which is cooled by said circuit, wherein said method comprises the steps of deactivating said compressor and then reactivating said compressor;
said method being characterized by: storing the rpm at which the compressor was operating when said deactivation took place; comparing said stored rpm at deactivation with a predetermined threshold value; reactivating the compressor at a compressor reactivation rpm value between said stored rpm and said predetermined threshold value, if said stored rpm is higher than said predetermined threshold value.

Preferably, the compressor continues to operate at an rpm equal to the stored rpm for a predetermined time. This allows controlling the compressor, before and after one deactivation, in accordance with a principle of continuity.

The present invention relates also to a refrigerating appliance which comprises a refrigerating circuit, a cell cooled by the refrigerating circuit, a variable speed compressor included in the refrigerating circuit, a control unit operationally connected to the compressor and adapted to control the compressor rpm, wherein the control unit carries out the steps of the method according to the present invention.

Further objects and advantages of the present invention will become more apparent from the following detailed description.

### [BRIEF DESCRIPTION OF THE DRAWINGS]

One preferred and advantageous embodiment of the present invention will now be described by way of non-limiting example with reference to the annexed drawings, wherein:
- Figure 1 shows one example of embodiment of a refrigerating appliance according to the present invention.
- Figure 2 shows one example of embodiment of a refrigerating circuit of a refrigerating appliance according to the present invention.
- Figure 3 is a block diagram of a system for controlling a refrigerating appliance.
- Figure 4 is a flow chart of a method for controlling a refrigerating appliance according to the present invention.

The above-mentioned drawings show different aspects and embodiments of the present invention and, where appropriate, similar structures, components, materials and/or elements in the various drawings are designated by the same reference numerals.

### [DETAILED DESCRIPTION OF THE INVENTION]

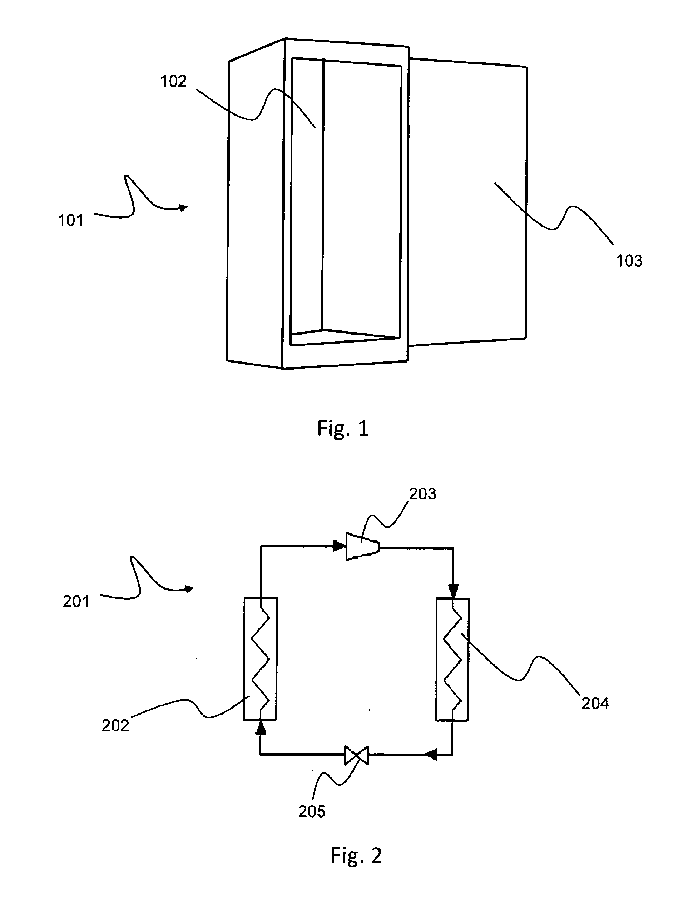

The example of Fig. 1 shows one embodiment of a refrigerating appliance according to the present invention, in particular a refrigerator 101.

The refrigerating appliance 101 comprises a cell 102 where foodstuffs to be preserved at a temperature lower than ambient temperature are placed. Said cell 102 is accessible from the outside through a door 103 located on the front face of the appliance. By opening said door, a user can gain access to the cell 102 in order to put in or take off foodstuffs. Conversely, by closing said door it is possible to keep the cell 102 thermally insulated from the outside environment.

The refrigerating appliance 101 comprises a refrigerating circuit 201 which implements a refrigerating cycle for cooling the cell 102. With reference to Fig. 2, the refrigerating circuit 201 comprises an evaporator 202, a variable speed compressor 203, a condenser 204 and an expansion valve 205. These elements are connected to one another through tubular channels within which a refrigerating fluid flows. The evaporator 202 is in thermal contact with the cell 102 and carries out the task of absorbing the heat thereof. The heat is absorbed by the fluid, which undergoes a change of state from liquid to gaseous. The absorbed heat is then yielded to the outside environment through the condenser 204, which determines another change of state from gaseous to liquid.

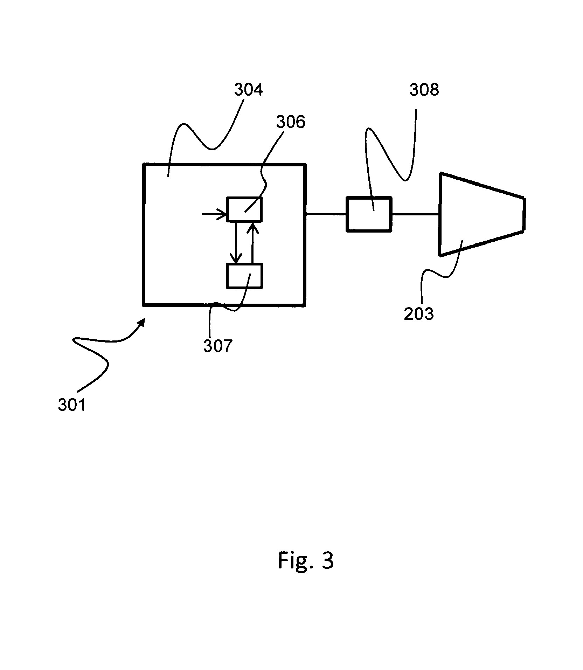

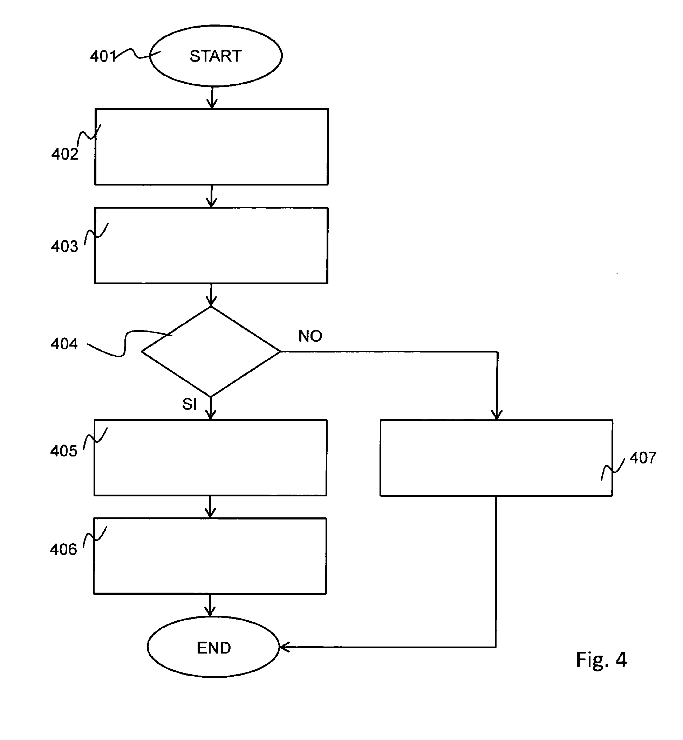

The refrigerating appliance 101 further comprises a control system 301 which will now be described with reference to Fig. 3 and which implements a control method as shown in Fig. 4.

The control system 301 comprises a microcontroller 304 of a per se known type.

The rpm of the variable speed compressor 203 is computed by the microcontroller 304 and is continuously stored into an internal register 306, called rpm register.

The microcontroller 304 transmits the datum stored in the rpm register 306 to an electronic compressor control module 308, e.g. comprising an inverter (not shown) which is operationally connected to both the microcontroller 304 and the compressor 203. More in detail, a digital output of the microcontroller 304 is connected to a digital input of the inverter, and an analog power output of the inverter is connected to an electric input of the compressor 203, which is adapted to receive a power supply current. Based on the data received from the microcontroller 304, the inverter modulates the frequency and amplitude of the power supply current and, as a result, the rpm of the compressor 203.

According to one aspect of the present invention, when for any reason the compressor is turned off (step 402 in Fig. 4), the datum related to the compressor speed (rpm) at the deactivation instant is stored into a reactivation register 307 (step 403 in Fig. 4). Compressor deactivation may be due, for example, to reaching the above-mentioned predetermined threshold of continuous operation time (e.g. after continuous operation for 8 hours), following which the compressor is turned off for a period of, for example, 8 minutes for cooling and re-balancing purposes, or to an intervention of the logic that controls the defrosting function (of a known type), or to an end-of-cycle control (of a known type), or to a normal thermoregulation control (ON/OFF cycles), or to external causes, such as a mains voltage drop below a minimum value (180 V) or a power blackout.

The microcontroller 304 compares the datum stored in the reactivation register 307 with an rpm threshold stored in the non-volatile memory area of the microcontroller 304 (step 404 in Fig. 4). The threshold value depends on the type of refrigerating appliance and on the type of variable speed compressor in use. Preferably, the threshold is 3,000 revolutions per minute.

If the datum in the reactivation register 307 is greater than or equal to the threshold, then the datum in the reactivation register 307 is transferred into the rpm register 306; in this manner, when the compressor is reactivated after the deactivation period, the microcontroller 304 will force the compressor 203 to operate at an rpm equal to the value stored in the reactivation register 307 (step 405 in Fig. 4), so as to immediately obtain adequate refrigerating capacity from the evaporator, without a transitory slow speed increase.

In one possible variant, the rpm at reactivation can be set to a value at least equal to said threshold value.

In one possible variant, the rpm at reactivation can be set to a value between said threshold value and said value stored in the reactivation register 307.

In this latter case, the microcontroller can determine said reactivation rpm by evaluating operating parameters that may depend, for example, upon the circumstances that caused the deactivation of the compressor.

In a preferred embodiment, the compressor rpm at reactivation is maintained for a predetermined period of time, called setting time, e.g. for 2 hours, in order to obtain the utmost refrigerating power and ensure the best possible preservation of the substances contained in the refrigerating appliance (step 406 in Fig. 4). At the end of the setting time, the microcontroller 304 will return to the normal mode of operation, wherein it will control the compressor 203 at a speed determined in a per se known manner, e.g. according to the normal control cycle based on energy saving conditions.

If, on the contrary, when reactivation occurs the datum in the reactivation register 307 is lower than the threshold, then the microcontroller 304 will maintain the normal mode of operation and will control the compressor 203 at a speed determined in a per se known manner, e.g. according to the normal control cycle based on energy saving conditions (step 407 in Fig. 4), as aforementioned.

The control method of the present invention can advantageously be carried out through a computer program, which comprises coding means for implementing one or more steps of the method when said program is executed by a computer. It is therefore understood that the protection scope extends to said computer program as well as to computer-readable means that comprise a recorded message, said computer-readable means comprising program coding means for implementing one or more steps of the method when said program is executed by a computer.

It is apparent that many changes may be made to the present invention by those skilled in the art without departing from the protection scope thereof as stated in the appended claims.

The microcontroller 304 may be replaced with a microprocessor or a generic control unit. The compressor electronic control module 308 may be directly integrated into the compressor 203.

Finally, the control system 301 of the present invention may be included in a freezer or any other household appliance.

These embodiments will nonetheless still fall within the protection scope of the present invention.

## Claims

1. A method for controlling a refrigerating appliance (101), said refrigerating appliance (101) comprising a refrigerating circuit (201) that includes a variable speed compressor (203), a cell (102) which is cooled by said circuit (201), wherein said method comprises the steps of deactivating (403) said compressor (203) and then reactivating (406) said compressor (203);
said method being **characterized by**:
- storing (402) the rpm at which the compressor (203) was operating when said deactivation took place;
- comparing said stored rpm at deactivation with a predetermined threshold value;
- reactivating the compressor (203) at a compressor reactivation rpm value between said stored rpm and said predetermined threshold value, if said stored rpm is higher than said predetermined threshold value.

2. A method according to claim 1, wherein said compressor (203) continues (407) to operate at said reactivation rpm for a predetermined time following said reactivation.

3. A method according to claim 2, wherein, when said predetermined time has elapsed, said compressor (203) is operated in accordance with a control cycle based on energy saving conditions.

4. A method according to any one of the preceding claims, wherein said predetermined threshold is 3,000 revolutions per minute.

5. A refrigerating appliance (101) comprising a refrigerating circuit (201), a cell (102) which is cooled by said circuit (201), a variable speed compressor (203) included in said circuit (201), a control unit (304) operationally connected to said compressor (203) and adapted to control the rpm of said compressor (203), said appliance (101) being **characterized in that** said control unit (304) comprises means for implementing the steps of the method according to any one of claims 1 to 4.

6. A refrigerating appliance (101) according to claim 5, wherein said appliance (101) is a refrigerator or a freezer.

7. A control device for a refrigerating appliance, comprising means for implementing the steps of the method according to any one of claims 1 to 4.
